# EUROPEAN PATENT APPLICATION

(11) **EP 1 802 091 A1**
(43) Date of publication of application: **27.06.2007**
(21) Application number: 06022050.6
(22) Date of filing: 20.10.2006
(51) Int. Cl.: H04M 11/02

(54) **Wireless intercom system**

(30) Priority: 20.12.2005 CN 200510131834
(71) Applicant: Mitac Technology Corp., Kuei San Hsiang T'ao yuan (TW)
(72) Inventor: Kuo, Yienchung, Kuei San Hsiang Taoyuan (TW)
(74) Representative: Manasse, Uwe

(57) **Abstract**

A mobile intercom system and method thereof are for providing a remote wireless transmission function to transmit a visiting message. The mobile intercom system comprises an intercom apparatus, a wireless station, and a mobile communication apparatus. The visiting message is transmitted by the intercom apparatus to the wireless station, and is then forwarded to the mobile communication apparatus. The mobile communication apparatus can further perform an intercom function through the wireless station after receiving the visiting message.

## Description

### FIELD OF THE INVENTION

The present invention relates to a mobile intercom system and method thereof, and more particularly to use a wireless station to contact an intercom apparatus and a mobile communication apparatus so as to transmit a visiting message by using a remote wireless transmission function.

### BACKGROUND OF THE INVENTION

Intercom apparatuses with doorbells combined with telephones are in common use. A user may use a telephone to make conversations with visitors, and may use buttons of the telephone to be door locks to increase convenience. The user may also know the purposes of the visitors to ensure the security when they come to visit. Moreover, when some doorbell system providers design an intercom apparatus with a doorbell to connect a television terminal, a camera is also equipped on the intercom apparatus with the doorbell. After the visitors press the buttons of the intercom apparatus with the doorbell, an image captured by the camera is then displayed on a television screen to enhance the security for the user.

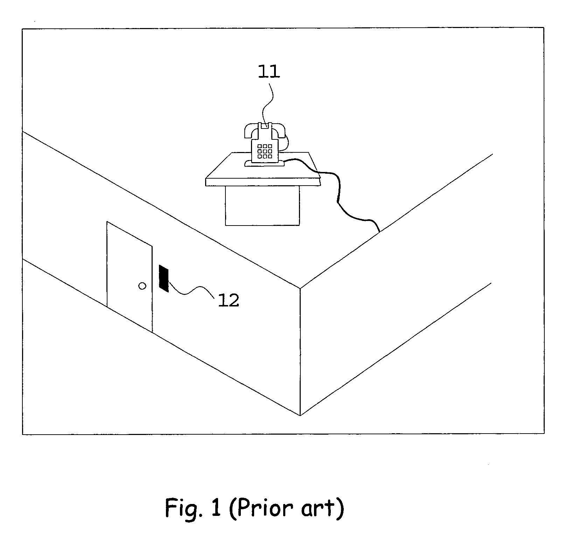

However, as shown in FIG. 1, a telephone 11 is usually disposed at a fixing position. When a guest uses an intercom apparatus with a doorbell 12 to notify a user, the user must walk to the telephone 11 to perform an intercom and unlocking action. If the user is cooking or is in the toilet, the user may miss visitors or important mails. In addition, although the telephone is designed for wireless, the problems of missing visitors or important mails may not be avoided that cause inconvenience and low efficiency for the user.

Accordingly, the present invention discloses a mobile intercom system and method thereof that use an intercom apparatus with a door bell function to incorporate with a mobile communication apparatus so that the mobile communication apparatus can perform an intercom action with the intercom apparatus through a wireless station, thereby increasing the efficiency and convenience.

### SUMMARY OF THE INVENTION

A primary object of the present invention is to provide a mobile intercom system that uses a wireless station to contact between an intercom apparatus and a mobile communication apparatus, and uses a remote wireless transmission function to transmit a visiting message to the wireless communication apparatus. A user is then notified that a guest comes to visit so as to further perform an intercom action with the guest.

The intercom system disclosed by the present invention includes an intercom apparatus, a wireless station and a mobile communication apparatus. The intercom apparatus has a doorbell function. The visiting message is then generated through the doorbell function. B y predetermining the forwarding parameters of the intercom apparatus, the visiting message is automatically transmitted to the wireless station through the wireless transmission way. The wireless station then forwards the visiting message to the predetermined wireless communication apparatus. The user can obtain the visiting message even though he left home. Furthermore, the intercom function provided by the intercom apparatus and the mobile communication apparatus does not only include a voice conversation function, but also have an image transfer function, thereby enhancing the security protection for home life.

Other features and advantages of the present invention and variations thereof will become apparent from the following description, drawings, and claims.

### BRIEF DESCRIPTION OF THE DRAWINGS

FIG. 1 is a schematic diagram illustrating a conventional doorbell system;
FIG. 2 is a schematic diagram illustrating a mobile intercom system of the present invention;
FIG. 3 is a block diagram illustrating an intercom apparatus and a mobile communication apparatus of the present invention;
FIG. 4 is a flowchart illustrating an intercom method of the present invention; and
FIG. 5 is a schematic diagram illustrating an intercom method of the present invention;

### DETAILED DESCRIPTION OF THE PREFERRED EMBODIMENTS

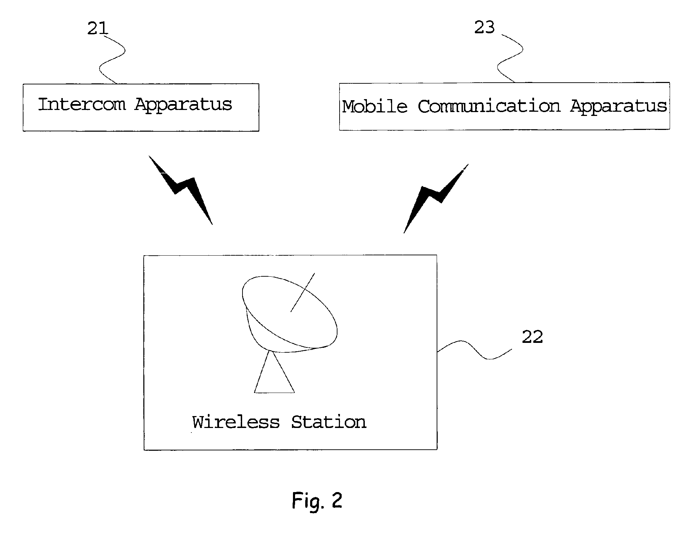

Referring to FIG. 2, a schematic diagram illustrates a mobile intercom system of the present invention. The mobile intercom system comprises an intercom apparatus 21, a wireless station 22 and a mobile communication apparatus 23. The intercom apparatus 21 has a doorbell function and forwarding parameters which can be predeterminined. When the doorbell function is triggered to notify a user, the intercom apparatus 21 transmits a visiting message to the wireless station 22 by the wireless transmission way. The wireless station 22 is provided by telecommunication operators. The visiting message is transmitted by the wireless transmission way to the predetermined mobile communication apparatus 23 based on forwarding parameters of the intercom apparatus 21 to achieve a remote wireless transmission function for the mobile intercom system. The mobile communication apparatus 23 receives the visiting message by the wireless transmission way. The user is then notified that a guest comes to visit and uses the communication function of the mobile communication apparatus 23 to dialogize with the guest. The mobile communication apparatus 23 is preferably a mobile phone.

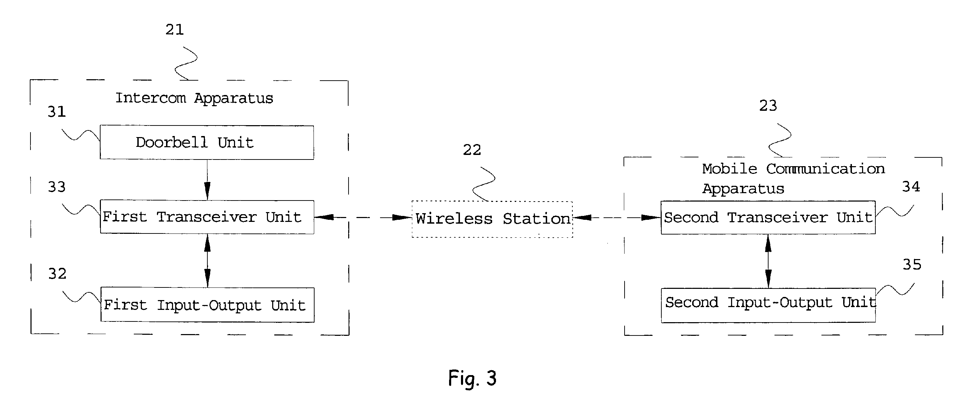

Referring to FIG. 3, a block diagram illustrates an intercom apparatus and a mobile communication apparatus of the present invention. The intercom apparatus 21 comprises a doorbell button 31, a first input-output unit 32 and a first transceiver unit 33. The mobile communication apparatus 23 comprises a second transceiver unit 34 and a second input-output unit 35. The doorbell button 31 allows the intercom apparatus 21 to perform the doorbell function and generate the visiting message. The first input-output unit 32 does not only comprise a speaker and a microphone, but also has a camera and a display for providing a voice conversation function and an image transfer function. The first transceiver unit 33 performs a remote wireless transmission action based on predetermined forwarding parameters. The wireless station 22 then forwards the visiting message to the mobile communication apparatus 23 and the mobile communication apparatus 23 then performs the intercom function with the intercom apparatus 21. The second transceiver unit 34 receives the visiting message transmitted from the first transceiver unit 33 through the wireless station 22. The intercom function is further provided to be performed through the wireless station 22. The second input-output unit 35 comprises a display, a camera lens, a speaker and a microphone for the voice conversion function and the image transfer function.

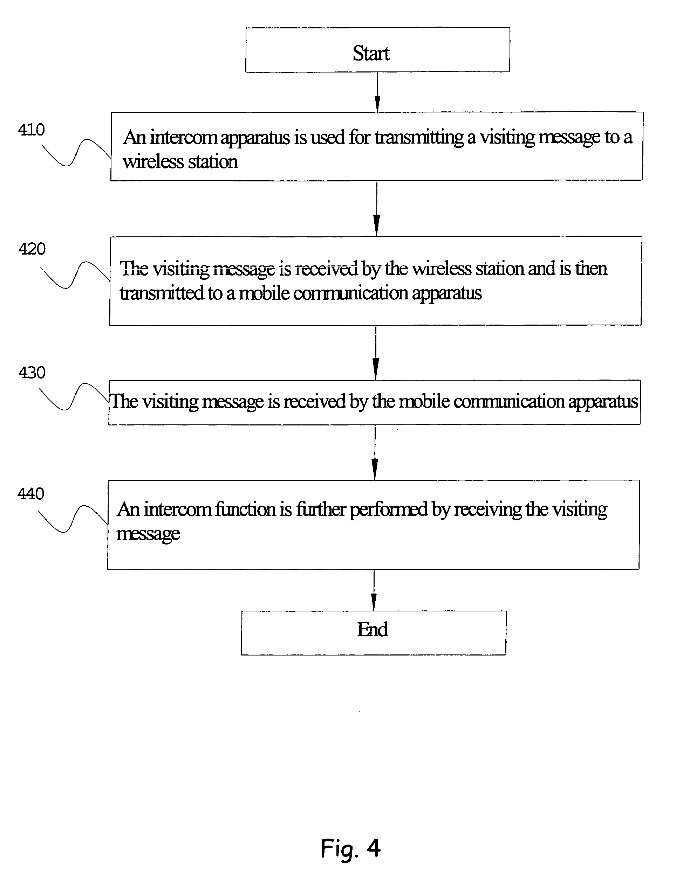

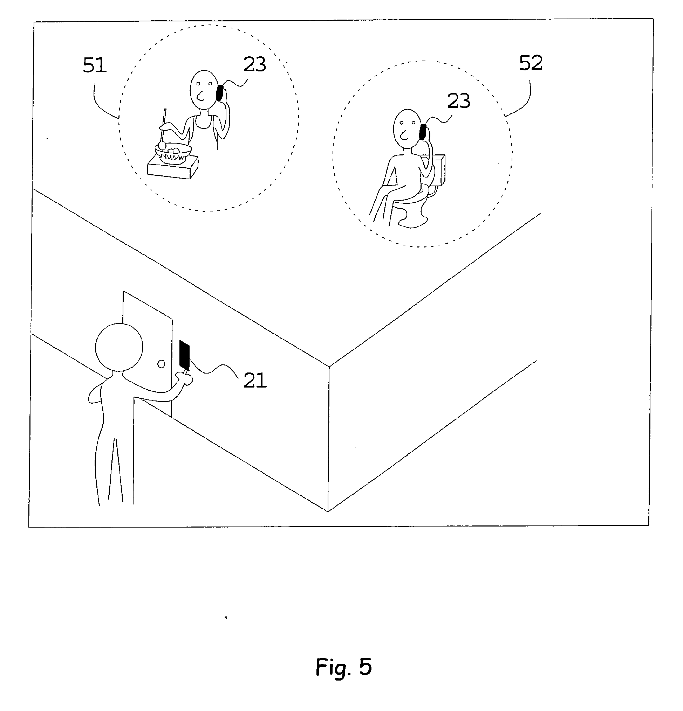

Referring to FIG. 4 and FIG. 5, according to a mobile intercom system disclosed by the present invention, FIG. 4 is a flowchart illustrating an intercom method of the present invention. The method comprises the following steps:
Step 410: An intercom apparatus is used for transmitting a visiting message to a wireless station.
Step 420: The visiting message is received by the wireless station and is then transmitted to a mobile communication apparatus.
Step 430: The visiting message is received by the mobile communication apparatus.
Step 440: An intercom function is further performed by receiving the visiting message.

In above steps, forwarding parameters of the intercom apparatus must be predetermined to allow the intercom apparatus to transmit the visiting message to the wireless station by a wireless transmission way so as to achieve a remote wireless transmission function. The intercom function includes an image transfer function and a voice conversation function. A mobile phone is taken to be the mobile communication apparatus for receiving the visiting message transmitted by the wireless station and for providing the intercom function. As shown in FIG. 5, the intercom method disclosed by the present invention, when the user is cooking 51 or is in the toilet 52, or left home, the user can use the intercom apparatus 21, the wireless station and the mobile communication apparatus 23 to achieve the remote wireless transmission function. The user then knows that a guest comes to visit at real-time and the intercom and unlocking action are further performed.

Although the features and advantages of the embodiments according to the preferred invention are disclosed, it is not limited to the embodiments described above, but encompasses any and all modifications and changes within the spirit and scope of the following claims.

## Claims

1. A mobile intercom system comprising:
at least one wireless station;
an intercom apparatus for transmitting a visiting message through said wireless station, and for performing an intercom function; and
a mobile communication apparatus for receiving said visiting message through said wireless station, and for performing said intercom function.

2. The mobile intercom system of claim 1, wherein said wireless station is for transmitting and receiving said visiting message to achieve a remote wireless transmission function.

3. The mobile intercom system of claim 1, wherein said intercom apparatus and said mobile communication apparatus are to use said wireless station to achieve said intercom function.

4. The mobile intercom system of claim 1, wherein said intercom function includes an image transfer function and a voice conversation function.

5. The mobile intercom system of claim 1, wherein said intercom apparatus includes a doorbell button for providing said visiting message.

6. The mobile intercom system of claim 1, wherein said intercom apparatus includes a first input-output unit for providing said intercom function.

7. The mobile intercom system of claim 1, wherein said intercom apparatus includes a first transceiver unit for performing a remote wireless transmission function by using a wireless transmission protocol.

8. The mobile intercom system of claim 1, wherein said mobile communication apparatus is a cell phone.

9. The mobile intercom system of claim 1, wherein said mobile communication apparatus includes a second input-output unit for providing said intercom function.

10. The mobile intercom system of claim 1, wherein said mobile communication apparatus includes a second transceiver unit for performing a remote wireless transmission function by using a wireless transmission protocol.

11. An intercom method, applicable for a mobile intercom system, and said intercom method comprising:
using an intercom apparatus to transmit a visiting message;
forwarding said visiting message via a wireless station;
using a mobile communication apparatus to receive said visiting message; and
performing an intercom function by receiving said visiting message.

12. The intercom method of claim 11, further comprising the step of using said wireless station to achieve a remote wireless transmission function.

13. The intercom method of claim 11, further comprising the step of using a cell phone to be said mobile communication apparatus.

14. The intercom method of claim 11, further comprising the step of providing an image transfer function and a voice conversation function to said intercom function.
